(19) Europäisches Patentamt
European Patent Office
Office européen des brevets

(11) **EP 4 542 942 A1**

(12) **EUROPEAN PATENT APPLICATION**
published in accordance with Art. 153(4) EPC

(43) Date of publication:
**23.04.2025 Bulletin 2025/17**

(21) Application number: **22946193.4**

(22) Date of filing: **15.06.2022**

(51) International Patent Classification (IPC):
***H04L 27/00*** (2006.01)

(52) Cooperative Patent Classification (CPC):
**H04L 27/00**

(86) International application number:
**PCT/CN2022/098994**

(87) International publication number:
**WO 2023/240499 (21.12.2023 Gazette 2023/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **HE, Chuanfeng**
**Dongguan, Guangdong 523860 (CN)**

(74) Representative: **Grassi, Stefano**
**Bugnion S.p.A.**
**Viale Lancetti, 17**
**20158 Milano (IT)**

(54) **COMMUNICATION STATE SWITCHING METHOD AND APPARATUS, AND TERMINAL DEVICE**

(57) Provided in the embodiments of the present invention are a communication state switching method and apparatus, and a terminal device. The method includes: a terminal device switches a first communication device from a first communication state to a second communication state on the basis of a first triggering condition, or switches the first communication device from the second communication state to the first communication state on the basis of a second triggering condition, the terminal device being capable of receiving, by means of a second communication device, control information sent by a network device, and controlling the communication states of the first communication device on the basis of the control information.

A terminal device switches, based on a first triggering condition, a first communication device from a first communication state to a second communication state, or switches, based on a second triggering condition, the first communication device from the second communication state to the first communication state; where the terminal device is able to receive control information from a network device through the second communication device, and control a communication state of the first communication device based on the control information

701

**FIG. 7**

EP 4 542 942 A1

**Description**

TECHNICAL FIELD

Embodiments of the present disclosure relate to the technical field of mobile communications, and in particular to a method and an apparatus for switching a communication state, and a terminal device.

BACKGROUND

In order to realize power saving of a terminal device, the terminal device may switch from a communication state with higher power consumption to a communication state with lower power consumption, and the terminal device has different operation behaviors in different communication states.

However, how the terminal device to switch the communication state with the higher power consumption after switching to the communication state with the lower power consumption, and how the terminal device to switch the communication state with the lower power consumption after switching to the communication state with the higher power consumption are inadequate in the current technology.

SUMMARY

Embodiments of the present disclosure provide a method and an apparatus for switching a communication state, a terminal device, a chip, a computer-readable storage medium, a computer program product, and a computer program.

According to an embodiment of the present disclosure, a method for switching a communication state is provided, and the method includes the following operations.

A terminal device switches, based on a first triggering condition, a first communication device from a first communication state to a second communication state, or the terminal device switches, based on a second triggering condition, the first communication device from the second communication state to the first communication state.

The terminal device is able to receive control information from a network device through the second communication device, and control a communication state of the first communication device based on the control information.

According to an embodiment of the present disclosure, an apparatus for switching a communication state is provided, which is applied to a terminal device. The apparatus includes a control unit.

The control unit is configured to switch, based on a first triggering condition, a first communication device from a first communication state to a second communication state, or switch, based on a second triggering condition, the first communication device from the second communication state to the first communication state.

The terminal device is able to receive control information from a network device through the second communication device, and control a communication state of the first communication device based on the control information.

According to an embodiment of the present disclosure, a terminal device is provided, which includes a processor and a memory. The memory is configured to store a computer program, and the processor is configured to call and run the computer program stored in the memory to perform the aforementioned method for switching the communication state.

According to an embodiment of the present disclosure, a chip is provided, which is configured to implement the aforementioned method for switching the communication state.

Specifically, the chip includes a processor configured to call and run a computer program in a memory to enable a device having installed thereon the chip to perform the aforementioned method for switching the communication state.

According to an embodiment of the present disclosure, a computer-readable storage medium is provided, which is configured to store a computer program for enabling a computer to perform the aforementioned method for switching the communication state.

According to an embodiment of the present disclosure, a computer program product is provided, which includes computer program instructions for enabling a computer to perform the aforementioned method for switching the communication state.

According to an embodiment of the present disclosure, a computer program is provided, which enables, when run on a computer, the computer to perform the aforementioned method for switching the communication state.

With the aforementioned technical solutions, the switching of the first communication device of the terminal device between the first communication state and the second communication state is implemented. Thus, it ensures that the first communication device in the first communication state is successfully switched to the second communication state based on the first triggering condition, and further ensures that the first communication device in the second communication state is successfully switched to the first communication state based on the second triggering condition. In such way, it is possible to implement the switching of the communication state of the first communication device in a case that, for example, the second communication device of the terminal device cannot receive the control information from the network device successfully.

BRIEF DESCRIPTION OF THE DRAWINGS

The accompanying drawings constituting a part of the present disclosure provide further understanding of the present disclosure. The schematic embodiments of the present disclosure and description thereof are intended to be illustrative of the present disclosure and do not constitute an undue limitation of the present disclosure. In the accompanying drawings:

FIG. 1 is a schematic diagram of an application scenario of an embodiment of the present disclosure.

FIG. 2 is a schematic diagram of a Discontinuous Reception (DRX) cycle according to an embodiment of the present disclosure.

FIG. 3 is a schematic diagram in which a power saving signal indicates whether to monitor a Physical Downlink Control Channel (PDCCH) according to an embodiment of the present disclosure.

FIG. 4 is a schematic diagram of positions of a Paging Frame (PF) and Paging Occasions (POs) according to an embodiment of the present disclosure.

FIG. 5 is a schematic diagram in which a power saving signal indicates whether to monitor a paging PDCCH according to an embodiment of the present disclosure.

FIG. 6 is a schematic diagram of waking up a main receiver by a wake-up receiver according to an embodiment of the present disclosure.

FIG. 7 is a schematic flowchart of a method for switching a communication state according to an embodiment of the present disclosure.

FIG. 8 is a first schematic diagram of a change of a communication state according to an embodiment of the present disclosure.

FIG. 9 is a second schematic diagram of a change of a communication state according to an embodiment of the present disclosure.

FIG. 10 is a third schematic diagram of a change of a communication state according to an embodiment of the present disclosure.

FIG. 11 is a fourth schematic diagram of a change of a communication state according to an embodiment of the present disclosure.

FIG. 12 is a fifth schematic diagram of a change of a communication state according to an embodiment of the present disclosure.

FIG. 13 is a schematic diagram of a structure of an apparatus for switching a communication state according to an embodiment of the present disclosure.

FIG. 14 is a schematic structural diagram of a communication device according to an embodiment of the present disclosure.

FIG. 15 is a schematic structural diagram of a chip of an embodiment of the present disclosure.

FIG. 16 is a schematic block diagram of a communication system according to an embodiment of the present disclosure.

DETAILED DESCRIPTION

The technical solutions in the embodiments of the present disclosure will be described below in combination with the drawings in the embodiments of the present disclosure. It is apparent that the described embodiments are partial embodiments of the present disclosure but not all embodiments. Based on the embodiments in the present disclosure, all other embodiments obtained by those of ordinary skill in the art without creative work shall fall within the scope of protection of the present disclosure.

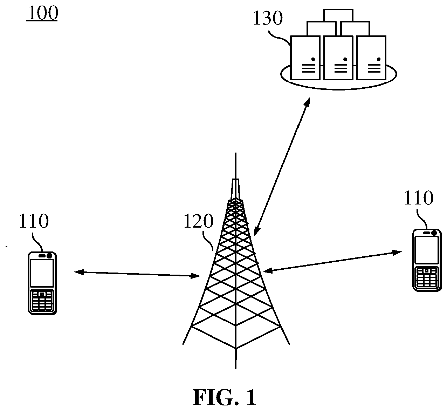

FIG. 1 is a schematic diagram of an application scenario of an embodiment of the present disclosure.

As shown in FIG. 1, a communication system 100 may include a terminal device 110 and a network device 120. The network device 120 may communicate with the terminal device 110 through an air interface. Multi-service transmission between the terminal device 110 and the network device 120 is supported.

It is to be understood that the embodiments of the present disclosure are illustrative with the communication system 100 only, but are not limited thereto. That is, the technical solutions of the embodiments of the present disclosure may be applied to various communication systems, such as: a Long Term Evolution (LTE) system, an LTE Time Division Duplex (TDD), a Universal Mobile Telecommunication System (UMTS), an Internet of Things (IoT) system, a Narrow Band Internet of Things (NB-IoT) system, an enhanced Machine-Type Communications (eMTC) system, a 5G communication system (also referred to as a New Radio (NR) communication system), or a future communication system, etc.

In the communication system 100 shown in FIG. 1, the network device 120 may be an access network device that communicates with the terminal device 110. The access network device may provide communication coverage for a specific geographic region and may communicate with a terminal device 110 (e.g., a User Equipment (UE)) in the coverage.

The network device 120 may be an Evolutional Node B (eNB or eNodeB) in an LTE system, a Next Generation Radio Access Network (NG RAN) device, a base station (gNB) in an NR system, or a wireless controller in a Cloud Radio Access Network (CRAN). The network device 120 may further be a relay station, an access point, a vehicle-mounted device, a wearable device, a hub, a switch, a network bridge, a router, or a network device in a future evolutional Public Land Mobile Network (PLMN), etc.

The terminal device 110 may be any terminal device, which includes, but is not limited to, a terminal device that has a wired or wireless connection to the network device 120 or other terminal devices.

For example, the terminal device 110 may refer to an access terminal, a UE, a user unit, a user station, a mobile station, a mobile platform, a remote station, a remote terminal, a mobile device, a user terminal, a terminal, a wireless communication device, a user proxy, or a user apparatus. The access terminal may be a cellular phone, a cordless phone, a Session Initiation Protocol (SIP) phone, an IoT device, a satellite handheld terminal, a Wireless Local Loop (WLL) station, a Personal Digital Assistant (PDA), a handheld device with a wireless communication function, a computing device, another processing device connected to a wireless modem, a vehicle-mounted device, a wearable device, a terminal device in a 5G network, or a terminal device in a future evolutional network, etc.

The terminal device 110 may be configured for Device to Device (D2D) communication.

The wireless communication system 100 may further include a core network device 130 that communicates with a base station. The core network device 130 may be a 5G Core (5GC) device, such as an Access and Mobility Management Function (AMF), an Authentication Server Function (AUSF), a User Plane Function (UPF), or a Session Management Function (SMF). In an embodiment, the core network device 130 may further be an Evolved Packet Core (EPC) device of the LTE network, e.g., a Session Management Function+Core Packet Gateway (SMF+PGW-C) device. It is to be understood that the SMF+PGW-C can achieve the same functions as the SMF and the PGW-C. During the process of network evolution, the aforementioned core network device may further be called by other names, or new network entities may be formed by dividing the functions of the core network, which is not limited in the embodiments of the present disclosure.

A connection may be established between various function units in the communication system 100 through a Next Generation (NG) interface, to realize communication.

For example, the terminal device establishes an air-interface connection with the access network device through an NR interface for transmitting user plane data and control plane signaling. The terminal device may establish a control plane signaling connection with the AMF through an NG interface 1 (abbreviated as N1). The access network device, such as a next generation wireless access base station (gNB), may establish a user plane data connection with the UPF through an NG interface 3 (abbreviated as N3). The access network device may establish the control plane signaling connection with the AMF through an NG interface 2 (abbreviated as N2). The UPF may establish the control plane signaling connection with the SMF through an NG interface 4 (abbreviated as N4). The UPF may interact the user plane data with a data network through an NG interface 6 (abbreviated as N6). The AMF may establish the control plane signaling connection with the SMF through an NG interface 11 (abbreviated as N11). The SMF may establish the control plane signaling connection with the PCF through an NG interface 7 (abbreviated as N7).

One base station, one core network device and two terminal devices are exemplarily shown in FIG. 1. In an embodiment, the wireless communication system 100 may include multiple base stations, and another number of terminal devices may be included in the coverage of each base station, which is not limited in the embodiments of the present disclosure.

It is to be noted that FIG. 1 only shows the system to which the present disclosure applies by way of example. Of course, the method shown in the embodiments of the present disclosure may be applied to other systems. In addition, the terms "system" and "network" in the present disclosure may be generally used interchangeably herein. In the present disclosure, the term "and/or" herein only indicates an association relationship for describing associated objects and represents that there are three kinds of relationships. For example, "A and/or B" may represent three conditions, i.e., independent existence of A, existence of both A and B, and independent existence of B. In addition, the character "/" herein usually represents that the previous and next associated objects form an "or" relationship. It is further to be understood that the term "indicate" referred to in the embodiments of the present disclosure may be a direct indication, an indirect indication, or an indicative of an association relationship. For example, "A indicates B", which may mean that A directly indicates B, e.g., B can be obtained through A. It may further mean that A indirectly indicates B, e.g., A indicates C and B can be obtained through C. It may further mean that there is an association relationship between A and B. It is further to be understood that the term "corresponding" referred to in the embodiments of the present disclosure may represent that there is a direct correspondence or an indirect correspondence between the two objects, may further represent that there is an association relationship between the two objects, a relationship between the indication and the object to be indicated, or a relationship between the configuration and the object to be configured, etc. It is further to be understood that the term "predefined" or "predefined rules" referred to in the embodiments of the present disclosure may be implemented by pre-stored corresponding codes, tables, or other means that may be used to indicate relevant information in a device (e.g.,

including a terminal device or a network device). The specific implementations of which are not limited in the present disclosure. For example, the "predefined" may refer to what is defined in a protocol. It is further to be understood that the term "protocol" in the embodiments of the present disclosure may refer to a standard protocol in the communication field, such as, an LTE protocol, an NR protocol, and relevant protocols applied in future communication systems, which is not limited in the present disclosure.

In order to facilitate understanding of the technical solutions of the embodiments of the present disclosure, related technologies of the embodiments of the present disclosure are described below. The following related technologies can be arbitrarily combined with the technical solutions of the embodiments of the present disclosure as alternatives, and all of which belong to the scope of protection of the embodiments of the present disclosure.

Power saving of the terminal device based on PDCCH

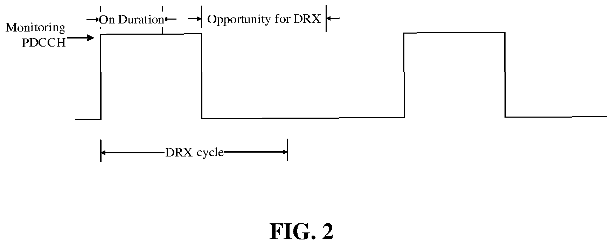

In order to reduce power consumption of the terminal device, a Discontinuous Reception (DRX) mechanism is introduced, such that the terminal device is enabled to enter a discontinuous receiving state without turning on a receiver all the time in a case that there is no data reception, thus achieving a purpose of saving power. In the DRX mechanism, a DRX cycle is configured for a terminal device in an Radio Resource Control (RRC) connected state. As shown in FIG. 2, one DRX cycle includes "On Duration (corresponding to DRX active time)" and "Opportunity for DRX (corresponding to DRX inactive time)". During "On Duration" time, the terminal device monitors and receives a downlink channel including a Physical Downlink Control Channel (PDCCH) and a signal. During "Opportunity for DRX" time, the terminal device does not receive a downlink channel such as PDCCH or a signal, to reduce power consumption. A terminal device in an RRC idle state or an RRC inactive state needs to receive a paging message in a manner similar to the DRX mechanism. There is one Paging Occasion (PO) in one DRX cycle, and the terminal device only monitors a paging PDCCH and paging message in the PO, and does not monitor the paging PDCCH or receive the paging message at a time other than the PO, to achieve the purpose of saving power. During the PO, the terminal device determines whether there is a paging message by detecting a paging PDCCH scrambled through a Paging-Radio Network Temporary Identity (P-RNTI).

In evolution of 5G, higher requirements are put forward for power saving of the terminal device. For example, for the existing DRX mechanism, during each On Duration, the terminal device needs to constantly detect a PDCCH to determine whether a base station schedules data transmission to be sent to the terminal device itself. However, for most terminal devices, there may be no need to receive data transmission for a long time, but it is still necessary to maintain a regular wake-up mechanism to monitor possible downlink transmission. For such terminal devices, there is space for further optimization of power saving of such terminal devices. Similar descriptions are also applicable for the terminal device receiving the paging message in the RRC idle state or RRC inactive state.

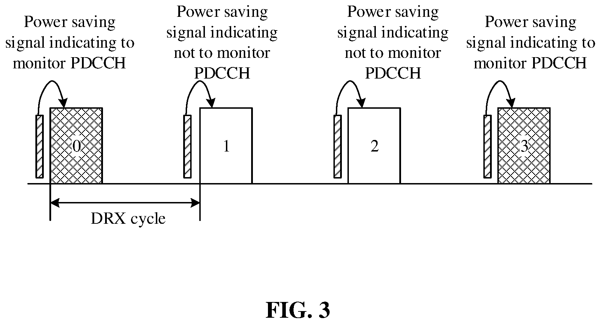

In order to optimize the power saving of the terminal device, a power saving signal is introduced. The power saving signal is used in combination with the DRX mechanism, and the terminal device receives the power saving signal before the On Duration. When there is data transmission for the terminal device during one DRX cycle, the power saving signal "wakes up" the terminal device to monitor a PDCCH during the On Duration. Otherwise, when there is no data transmission for the terminal device during one DRX cycle, the power saving signal does not "wake up" the terminal device, and the terminal device does not need to monitor the PDCCH during the On Duration. Compared to the existing DRX mechanism, when there is no data transmission for the terminal device, the terminal device may omit monitoring the PDCCH during the On Duration, thereby achieving the power saving. Time of the terminal device being outside the On Duration is referred to as DRX inactive time; and time during the On Duration is referred to as DRX active time. In an example, a process of indicating, through the power saving signal, whether the terminal device monitors the PDCCH during the On Duration is as shown in FIG. 3. The power saving signal may be carried through a newly defined Downlink Control Information (DCI) format 2_6. A network configures the terminal device to detect a search space set of a PDCCH carrying the DCI format 2_6.

A similar power saving signal is introduced for the terminal device receiving the paging message in the RRC idle state or RRC inactive state. A Paging Frame (PF) indicates which system frame number the paging message should appear on, and a Paging Occasion (PO) indicates a moment when it is possible to appear. One PF may include one or more POs, and in each DRX cycle or paging cycle, the terminal device only needs to monitor the PO which belongs to the terminal device itself.

A System Frame Number (SFN) that satisfies a following formula may be used as a PF frame.

$$(SFN + PF\_offset) \bmod T = (T \operatorname{div} N) * (UE\_ID \bmod N).$$

In the PF, an index of a PO corresponding to the terminal device, i.e., $i\_s$, may be calculated according to a following formula.

$$i\_s = floor(UE\_ID/N) \bmod Ns.$$

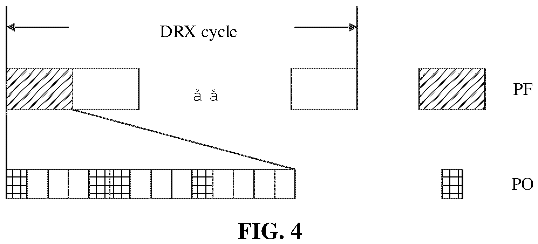

T represents the DRX cycle of the terminal device. T = min (T_ue, T_sib) if a default DRX cycle indicated in a system message is recorded as T_sib and if a DRX value T_ue of the terminal device has been configured.; and a default value T = T_sib indicated in the system message is used if T_ue is not configured. UE_ID = (5G-S-TMSI mod 1024), 5G-S-TMSI is identification information of the terminal device. N is the number of PFs in T. Ns is the number of POs in one PF. PF_offset is a frame offset used for determining a PF. For example, a position of a PF in one DRX cycle and positions of POs in the PF are shown in FIG. 4.

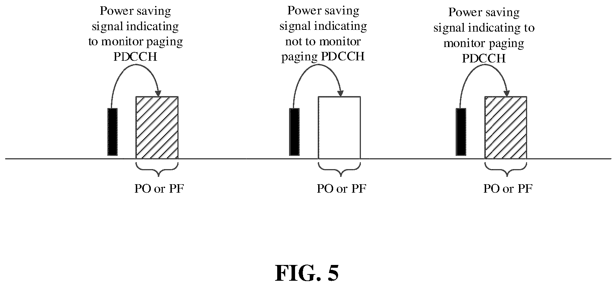

The terminal device in the RRC idle state or RRC inactive state periodically monitors the paging PDCCH on the POs corresponding to the terminal device itself. However, in an actual situation, a probability for the terminal device to be paged may not be high. The terminal device periodically monitors the paging PDCCH on the corresponding POs, but fails to monitor the paging PDCCH sent to the terminal device itself, which may cause waste of power. Similar to the power saving of the terminal device in the RRC connected state, the power saving of the terminal device in the RRC idle state for receiving the paging message is optimized. Additionally, a similar power saving signal is introduced, and the power saving signal is used to indicate whether the terminal device monitors the paging PDCCH on the target PO before arrival of the target PO. As shown in FIG. 5, a power saving signal indicates whether one or more subgroups of terminal devices monitor the paging PDCCH on the corresponding PF(s) or PO(s).

During the evolution of standards, the power saving of the terminal device in the RRC connected state continues to be enhanced, An enhanced solution of switching search space set groups, and a solution of skipping the detection of the PDCCH (i.e., PDCCH skipping) when needed, are introduced to save power.


**Power saving of terminal based on a wake-up receiver**


In previous solutions, a wake-up signal is received by a main receiver of the terminal device. For further power saving of the terminal device, it is considered to introduce a wake-up receiver (Wake Up receiver, WUR) to receive the wake-up signal, and the wake-up receiver has characteristics of very low cost, very low complexity and very low power consumption. A type (modulation mode, waveform, etc.) of the wake-up signal received by the wake-up receiver may be the same as or different from that of the wake-up signal received by the main receiver. Generally, the wake-up signal received by the main receiver is carried based on the PDCCH, while the wake-up signal received by the wake-up receiver is an envelope signal that is modulated by performing Amplitude Shift Keying (ASK) modulation on a carrier signal. The wake-up receiver may receive the wake-up signal in a manner based on envelope detection. The wake-up receiver may be passive since demodulation of the envelope signal is completed mainly by driving a circuit with low power consumption based on the energy provided by a radio frequency signal. The wake-up receiver may further be powered by the terminal device. Regardless of the manner of the power supply, the wake-up receiver greatly reduces the power consumption compared to the main receiver. The wake-up receiver may be combined with the terminal device and as an additional module of the receiver of the terminal device, or may individually serve as a wake-up function module of the terminal device.

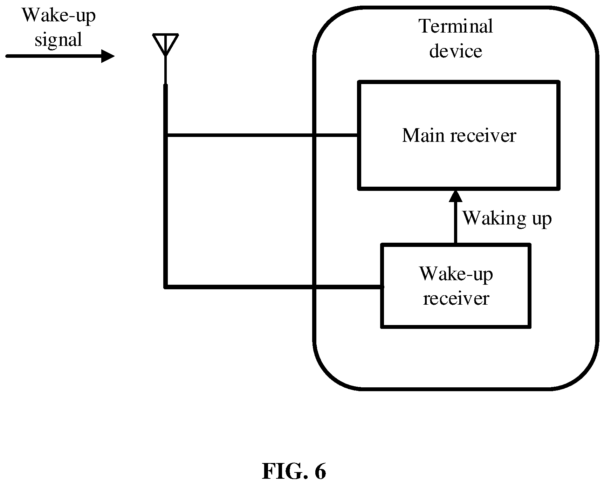

In an example, the receiver of the terminal device, as shown in FIG. 6, includes the wake-up receiver and the main receiver. Generally, the wake-up receiver and the main receiver may share a set of radio frequency antennas. The wake-up receiver receives the wake-up signal. If the wake-up signal requires the terminal device to turn on the main receiver, the terminal device may be instructed by the wake-up signal to turn on the main receiver. Otherwise, the main receiver of the terminal device may be in an off state.

The wake-up receiver does not need to be turned on and turned off as the main receiver to save power, but may be activated by the wake-up signal and receive the wake-up signal at any time. In some implementations, the wake-up signal, as an envelope signal, may be obtained by performing the ASK modulation on the carrier signal. For example, On-Off Keying (OOK) modulation may be performed on the carrier signal. The principle of the OOK modulation is to modulate an amplitude of the carrier signal to be a non-zero value or a zero value, which respectively corresponds to On or Off and is used to represent information bits. The OOK is also known as Binary Amplitude Shift Keying (2ASK).

The further power saving of the terminal device may be achieved by waking up the main receiver of the terminal device by the wake-up receiver. However, it has not been clarified under what conditions the terminal device turns off the main receiver, and under what conditions the terminal device turns on the main receiver other than by the wake-up signal in a case that the main receiver is turned off. If the main receiver is turned off for a long time, an interruption of the communication will be caused, and if the main receiver is turned on for a time, the power consumption will be increased. Therefore, some mechanisms are needed to ensure that the performance of the communication is minimally affected when the terminal device is in the condition of saving power. For such purpose, the following technical solutions of the embodiments of the present disclosure are proposed.

In order to facilitate understanding of the technical solutions of the embodiments of the present disclosure, the technical solutions of the present disclosure are described in detail below according to specific embodiments. The above related technologies, served as optional solutions, may be arbitrarily combined with the technical solutions of the embodiments of the present disclosure, all of which belong to the scope of protection of the embodiments of the present disclosure. The embodiments of the present disclosure include at least some of the following.

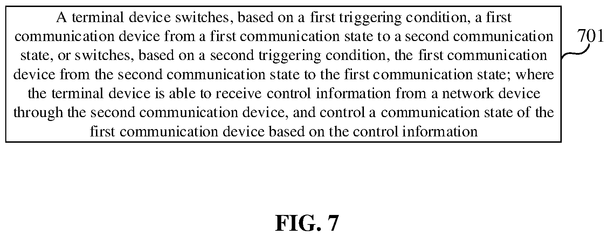

FIG. 7 is a schematic flowchart of a method for switching a communication state according to an embodiment of the present disclosure. As shown in FIG. 7, the method for switching the communication state includes the following operations.

At block 701, a terminal device switches, based on a first triggering condition, a first communication device from a first communication state to a second communication state, or the terminal device switches, based on a second triggering condition, the first communication device from the second communication state to the first communication state. The terminal device is able to receive control information from a network device through the second communication device, and control a communication state of the first communication device based on the control information.

In the embodiments of the present disclosure, the terminal device has the first communication device and the second communication device.

In some implementations, the first communication device is a first receiver and the second communication device is a second receiver.

In some implementations, the first communication device is a first transceiver and the second communication device is a second transceiver. Here, the first transceiver includes a first receiver and a first transmitter. The second transceiver includes a second receiver and a second transmitter.

It is to be noted that the embodiments of the present disclosure do not limit names of the first communication device and second communication device. In an example, the first communication device may be referred to as a main communication device, and the second communication device may be referred to as an auxiliary communication device. In another example, the first communication device may be referred to as a main receiver, and the second communication device may be referred to as an auxiliary receiver or a wake-up receiver. In yet another example, the first communication device may be referred to as a main transceiver and the second communication device may be referred to as an auxiliary transceiver.

In some implementations, the first communication device is mainly used for transmission of signals and/or channels, and the transmission here means receiving and/or sending. The second communication device is mainly used to receive control information sent by the network device, and further to control the communication state of the first communication device based on the control information. For example, the first communication device in the second communication state may be indicated by the second communication device to be switched to the first communication state, or the first communication device in the first communication state may be indicated by the second communication device to be switched to the second communication state.

In some implementations, power consumption of the second communication device is lower than power consumption of the first communication device; and/or, power consumption corresponding to the first communication device in the first communication state is higher than power consumption corresponding to the first communication device in the second communication state.

In the embodiments of the present disclosure, an operation supported by the first communication device in the first communication state is different from an operation supported by the first communication device in the second communication state.

In some implementations, the operation supported by the first communication device in the first communication state includes at least one of: a signal transmission operation and/or a channel transmission operation, or a measurement operation. The transmission operation here means a receiving operation and/or a sending operation.

In some implementations, the operation supported by the first communication device in the second communication state includes a measurement operation.

It is to be noted that the embodiments of the present disclosure do not limit names of the first communication state and the second communication state. For example, the first communication state may be referred to as an on state, a near-on state, or a wake-up state. The second communication state may be referred to as an off state, a near-off state, or a dormant state.

It is to be noted that, when the first communication device of the terminal device is in the first communication state, the first communication device may perform the signal transmission operation and/or the channel transmission operation (e.g., receiving and/or sending a signal and/or a channel). In addition, the first communication device may also perform the measurement operation, such as a Radio Resource Management (RRM) measurement, a Radio Link Monitoring (RLM) measurement, a measurement used for a beam management process, or the like. When the first communication device of the terminal device is in the second communication state, although the first communication device cannot perform the signal transmission operation and/or the channel transmission operation (e.g., receiving and/or sending the signal and/or the channel), there still are some measurement needs of the terminal device, such as the RRM measurement, the RLM measurement, the measurement used for the beam management process, or the like. Therefore, the terminal device may perform the measurement operation. For the measurement of the terminal device, it is required to measure a reference signal within a specific time window, and generally, the time window of the measurement is short. It is to be noted that, if the first communication device of the terminal device is in the second communication state and does not perform such related measurements, negative effects will be caused on mobility management, link monitoring and other processes. Therefore, when it is required to measure the reference signal, the terminal device may briefly turn on the first communication device to complete the measurement. However, it does not mean that the first communication device is woken up and in the first communication state, because the first communication device at this time still cannot perform the signal transmission operation and/or the channel transmission operation.

In the embodiments of the present disclosure, the terminal device may implement the switching of the communication state of the first communication device based on a triggering condition, which is illustrated below.

**Solution 1: the first communication device is switched from the first communication state to the second communication state**

**Solution 1-1)**

In some implementations, in a case that the first communication device is in the first communication state, the terminal device switches, based on a first timer, the first communication device from the first communication state to the second communication state.

In a specific implementation, the terminal device starts the first timer after the first communication device is switched to the first communication state. If the terminal device receives a signal and/or a channel through the first communication device during operation of the first timer, the terminal device restarts the first timer. If the first timer expires, the terminal device switches the first communication device from the first communication state to the second communication state.

In some implementations, a duration of the first timer is configured by the network device, or the duration of the first timer is predefined, or the duration of the first timer is determined based on a reference duration. Here, optionally, the reference duration is a duration of a Discontinuous Reception (DRX) cycle. As an example, the DRX cycle is a Long DRX Cycle.

The aforementioned solution is explained and illustrated below in combination with specific application examples.

When the first communication device of the terminal device in the first communication state, the first communication device may be used for reception of a signal and/or a channel. When the terminal device does not need to receive the channel and/or the signal, the first communication device may be switched to the second communication state for saving power. When the first communication device needs to receive the signal and/or the channel again, second control information (which may be referred to as a wake-up signal or wake-up information) sent by the network device may be received through the second communication device, and thereby the first communication device is triggered to be switched to the first communication state.

Based on the second communication device and the second control information, the terminal device may switch the first communication device to the first communication state. Further, when the first communication device is in the first communication state, the first communication device may be switched to the second communication state in the following manner.

Considering that the DRX mechanism refers to performing discontinuous reception based on a degree of data reception activity to achieve power saving, it is a reasonable method to determine how to switch the first communication device to the second communication state based on the reception of the signal and/or channel. In the DRX mechanism, the first communication device of the terminal device periodically starts a PDCCH detection window and determines the time to stop the detection according to the detection result. Thus, the first communication device enters a state in which the PDCCH is not received. Different from the DRX mechanism, in the power saving mechanism of the terminal device based on the second communication device and the second control information, the communication state of the first communication device of the terminal device is not switched periodically, but is switched based on the triggering of the second control information. Accordingly, a timer (i.e., the aforementioned first timer) is set, and the timer is started when the first communication device enters the first communication state. During operation of the timer, if the terminal device receives a PDCCH for indicating uplink transmission and/or downlink transmission, the timer is restarted. When the timer expires, the first communication device of the terminal device enters the second communication state.

As an implementation, the timer may be an independent timer for determining the time when the first communication device of the terminal device is switched to the second communication state. The duration of the timer may be configured by the network device or predefined.

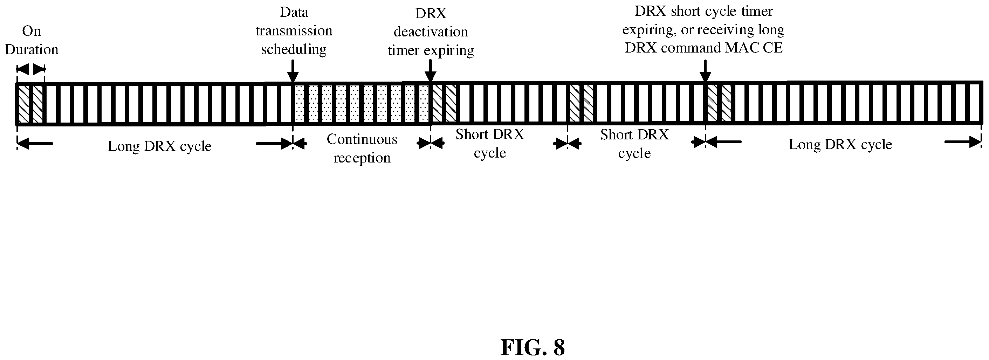

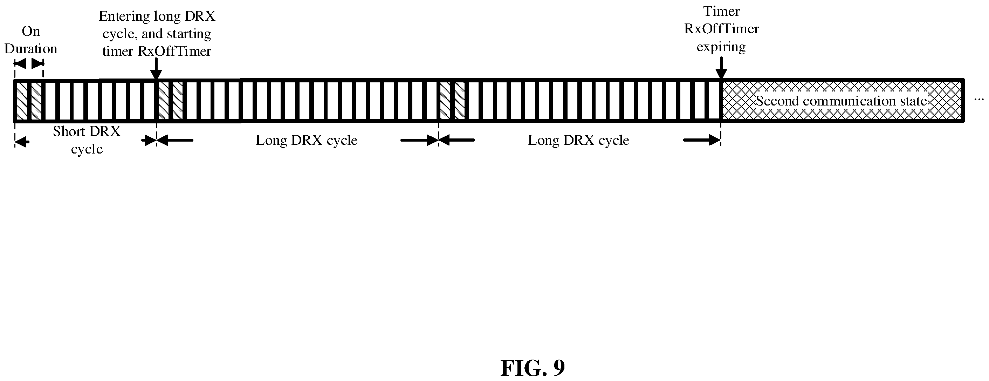

As another implementation, the duration of the timer may also be determined according to a duration of an existing timer. In the DRX mechanism, the DRX cycle may be configured as a DRX short cycle or a DRX long cycle. When in a state of the DRX short cycle, the terminal device starts or restarts a DRX short cycle timer (drx-ShortCycleTimer) according to reception of data scheduling. When the drx-ShortCycleTimer expires or the terminal device receives a Long DRX Command MAC CE, the terminal device enters a state of the long DRX cycle to further save the power. As shown in FIG. 8, when in the state of the long DRX cycle, the terminal device starts or restarts a DRX inactivity timer (drx-InactivityTimer) upon receiving the data transmission scheduling. When the drx-InactivityTimer expires, the terminal device enters the state of the short DRX cycle, and starts the drx-ShortCycleTimer at the same time. When the drx-ShortCycleTimer expires or the terminal device receives the Long DRX Command MAC CE, the terminal device enters the state of the long DRX cycle. The duration of the timer (i.e., the aforementioned first timer) for determining the time when the first communication device of the terminal device is switched to the second communication state may be set based on a duration of the long DRX cycle, such as equal to K times the long DRX cycle (K is a positive integer). When the terminal device enters the state of the long DRX cycle, the timer is started. When the terminal device passes K long DRX cycles in the state of the long DRX cycle, the timer expires and the first communication device of the terminal device is switched to the second communication state. As shown in FIG. 9, when the terminal device enters the state of the long DRX cycle, a timer RxOffTimer (i.e., the aforementioned first timer) is started, and the duration of the RxOffTimer is set to 2 long DRX cycles (i.e., K = 2). When the RxOffTimer expires, the first communication device of the terminal device is switched to the second communication state. In the aforementioned solution, since the terminal device does not receive the data transmission scheduling from the network, the terminal device is remained in the state of the long DRX cycle. When the duration of the terminal device remained in the state of the long DRX cycle satisfies a certain duration (i.e., the duration of the timer RxOffTimer), that is, the terminal device does not receive the data transmission scheduling from the network during the certain duration, the first communication device of the terminal device is switched to the second communication state to further save the power.

**Solution 1-2)**

In some implementations, in a case that the first communication device is in the first communication state, the terminal device switches the first communication device from the first communication state to the second communication state if the terminal device receives first control information. The first control information is used to be indicative of switching the first communication device from the first communication state to the second communication state.

Here, after receiving the first control information, the terminal device switches the first communication device from the first communication state to the second communication state at a first time. The first time is a time after a reception time for the first control information.

In some implementations, the first time is configured by the network device or predefined.

In some implementations, the first time is determined based on a second time and a second duration. The second time is the reception time for the first control information, and the second duration is configured by the network device or predefined. Optionally, the first time is the sum of the second time and the second duration. Here, the reception time for the first control information may be a last symbol of a reception time unit of the first control information.

In the aforementioned solution, the first time or the second duration is associated with a first processing capability of the terminal device. The first processing capability indicates a processing capability of the terminal device from receiving the first control information to being prepared to switch the first communication device from the first communication state to the second communication state. A duration from the first time to the second time, or the second duration, is required to be greater than or equal to the duration corresponding to the first processing capacity of the terminal device.

In the aforementioned solution, the terminal device may receive the first control information in the following manners, which, however, may not be limited thereto.

In a first manner, the terminal device receives, through the first communication device, the first control information from the network device. Here, optionally, the first control information is carried in a Media Access Control Control Element (MAC CE) and/or a PDCCH.

In a second manner, the terminal device receives, through the second communication device, the first control information from the network device. Here, optionally, the first control information is carried in the PDCCH. Here, after the first control information from the network device is received through the second communication device, the second communication device indicates the first communication device to be switched from the first communication state to the second communication state.

The aforementioned solution is explained and illustrated below in combination with specific application examples.

When the first communication device of the terminal device is in the first communication state, the first communication device may be used for reception of a signal and/or a channel. When the terminal device does not need to receive the channel and/or the signal, the first communication device may be switched to the second communication state for saving power. When the first communication device needs to receive the signal and/or the channel again, second control information (which may be referred to as a wake-up signal or wake-up information) sent by the network device may be received through the second communication device, and thereby the first communication device is triggered to be switched to the first communication state.

Based on the second communication device and the second control information, the terminal device may switch the first communication device to the first communication state. Further, when the first communication device is in the first communication state, the first communication device may be switched to the second communication state in the following manner.

The network device may actively send the first control information (which may also be referred to as a dormant signal or dormant information) to the terminal device, and the first control information triggers the first communication device of the terminal device to be switched to the second communication state.

As an implementation, the terminal device may receive the first control information through the first communication device, and further switch the first communication device to the second communication state at a corresponding effective time (i.e., the aforementioned first time). Here, the first control information may be carried by the MAC CE, or, the first control information may be carried by the PDCCH. In an example, the first control information is carried by the PDCCH that carries scheduling information, and the network, while scheduling the transmission of the terminal device through the PDCCH, indicates that the terminal device may switch the first communication device to the second communication state after completion of the transmission through the PDCCH. In another example, the first control information is carried by a common PDCCH or a group common PDCCH. In yet another example, the first control information is carried by a PDCCH order. After receiving the first control information, the terminal device turns off the first communication device at the effective time (i.e., the aforementioned first time).

As another implementation, the terminal device may receive the first control information through the second communication device, and trigger the first communication device to be switched to the second communication state at the corresponding effective time (i.e., the aforementioned first time). Here, the first control information may be carried by the PDCCH.

**Solution 2: the first communication device is switched from the second communication state to the first communication state**

**Solution 2-1)**

In some implementations, in a case that the first communication device is in the second communication state, the terminal device switches, based on a second timer, the first communication device from the second communication state to the first communication state.

In a specific implementation, the terminal device starts the second timer after the first communication device is switched to the second communication state. If the terminal device receives second control information during operation of the second timer, the terminal device switches the first communication device from the second communication state to the first communication state, and stops the second timer. If the second timer expires, the terminal device switches the first communication device from the second communication state to the first communication state. The second control information is used to be indicative of switching the first communication device from the second communication state to the first communication state.

In the aforementioned solution, the terminal device may receive the second control information in the following manners, which, however, may not be limited thereto.

In a first manner, the terminal device receives, through the first communication device, the second control information from the network device. Here, optionally, the second control information is carried in the MAC CE and/or the PDCCH.

In a second manner, the terminal device receives, through the second communication device, the second control information from the network device. Here, optionally, the second control information is carried in the PDCCH. Here, after the second control information from the network device is received through the second communication device, the second communication device indicates the first communication device to be switched from the second communication state to the first communication state.

In some implementations, if the terminal device receives the first control information during the operation of the second timer, the terminal device restarts the second timer. The first control information is used to be indicative of switching the first communication device from the first communication state to the second communication state. In such way, the time during which the first communication device is in the second communication state may be extended through the first control information.

In some implementations, a duration of the second timer is configured by the network device; or the duration of the second timer is predefined.

In the aforementioned solution, the terminal device may receive the first control information in the following manners, which, however, may not be limited thereto.

In a first manner, the terminal device receives, through the first communication device, the first control information from the network device. Here, optionally, the first control information is carried in the MAC CE and/or the PDCCH.

In a second manner, the terminal device receives, through the second communication device, the first control information from the network device. Here, optionally, the first control information is carried in the PDCCH. Here, after the first control information from the network device is received through the second communication device, the terminal device restarts the second timer. In such way, the time during which the first communication device is in the second communication state may be extended through the first control information.

The aforementioned solution is explained and illustrated below in combination with specific application examples.

Based on the second communication device and the second control information (which may be referred to as the wake-up signal or wake-up information), the terminal device may switch the first communication device to the first communication state. However, if the first communication device of the terminal device in the second communication state has not received the second control information, it is necessary to consider whether the terminal device always maintains the first communication device to be in the second communication state. When the terminal device does not receive the second control information, one possibility is that the network device does not send the second control information, and another possibility is that the network device sends the second control information but the second communication device of the terminal device does not receive the second control information. The latter is caused by a poor coverage of the second control information. In order to avoid such case, a mechanism is required to avoid that the first communication device of the terminal device is always in the second communication state and cannot be switched to the first communication state.

To switch the first communication device of the terminal device to the first communication state, a timer (i.e., the aforementioned second timer) is set. When the first communication device of the terminal device enters the second communication state, the timer is started. When the timer expires, the first communication device of the terminal device enters the first communication state. During operation of the timer, if the terminal device receives the second control information, the operation of the timer is stopped and the timer is reset. By setting the timer, if the first communication device of the terminal device is in the second communication state for a certain duration and is still not woken up by the network to enter the first communication state, the terminal device may trigger the first communication device to enter the first communication state according to the timer. Further, the network may select to switch the RRC state of the terminal device to the RRC inactive state or RRC idle state through an RRC signaling. If the terminal device cannot normally wake up the first communication device to enter the first communication state due to a link failure, the terminal device may further perform a measurement and/or initiate a link recovery process after waking up the first communication device to enter the first communication state.

As an implementation, the timer may be an independent timer for determining the time when the first communication device of the terminal device is switched to the first communication state. The duration of the timer may be configured by the network device or predefined. In a case that the duration of the timer is configured by the network, the network may indicate the duration of the timer in the first control information (which may also be referred to as the dormant signal or dormant information) sent to the terminal device. The first control information may be carried by the MAC CE or the PDCCH.

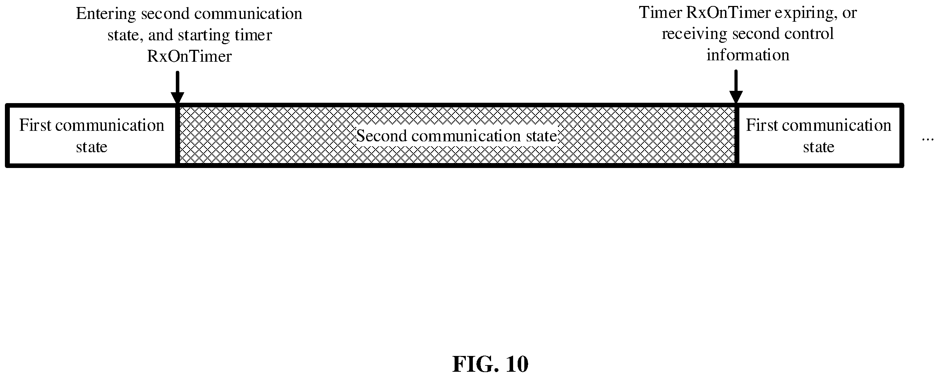

As shown in FIG. 10, when the first communication device of the terminal device enters the second communication state, the terminal device starts the timer RxOnTimer (i.e., the aforementioned second timer). When the RxOnTimer expires or the terminal device receives the second control information, the first communication device of the terminal device is switched to the first communication state.

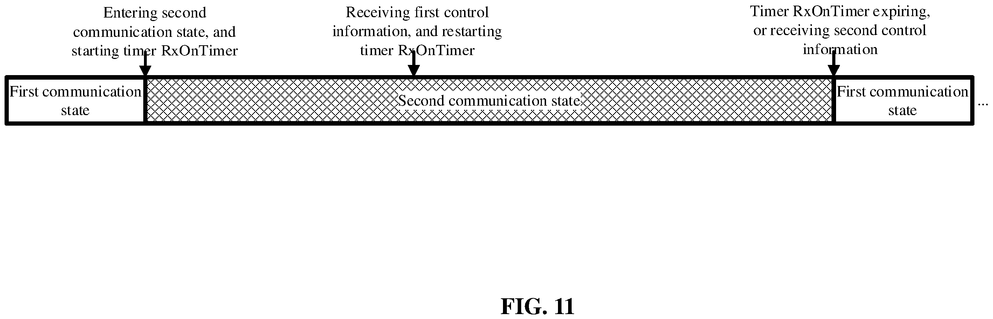

Further, when the first communication device of the terminal device is in the second communication state, the first control information (which may also be referred to as the dormant signal or dormant information) may also be received through the second communication device. When the terminal device receives the first control information, the terminal device restarts the RxOnTimer. In such way, if the network does not want the first communication device of the terminal device to be switched to the first communication state, the network may maintain the first communication device of the terminal device to be in the second communication state by continuously sending the first control information, as shown in FIG. 11.

### Solution 2-2)

In some implementations, in a case that the first communication device is in the second communication state, the terminal device switches the first communication device from the second communication state to the first communication state if the terminal device triggers uplink transmission.

In some implementations, the uplink transmission includes at least one of: Scheduling Request (SR) transmission, Physical Random Access Channel (PRACH) transmission, Physical Uplink Control Channel (PUCCH) transmission, Configured Grant Physical Uplink Shared Channel (CG PUSCH) transmission, or Sounding Reference Signal (SRS) transmission.

The aforementioned solution is explained and illustrated below in combination with specific application examples.

Based on the second communication device and the second control information (which may be referred to as the wake-up signal or wake-up information), the terminal device may switch the first communication device to the first communication state. However, if the first communication device of the terminal device in the second communication state has not received the second control information, it is necessary to consider whether the terminal device always maintains the first communication device to be in the second communication state. When the terminal device does not receive the second control information, one possibility is that the network device does not send the second control information, and another possibility is that the network device sends the second control information but the second communication device of the terminal device does not receive the second control information. The latter is caused by the poor coverage of the second control information. In order to avoid such case, a mechanism is required to avoid that the first communication device of the terminal device is always in the second communication state and cannot be switched to the first communication state.

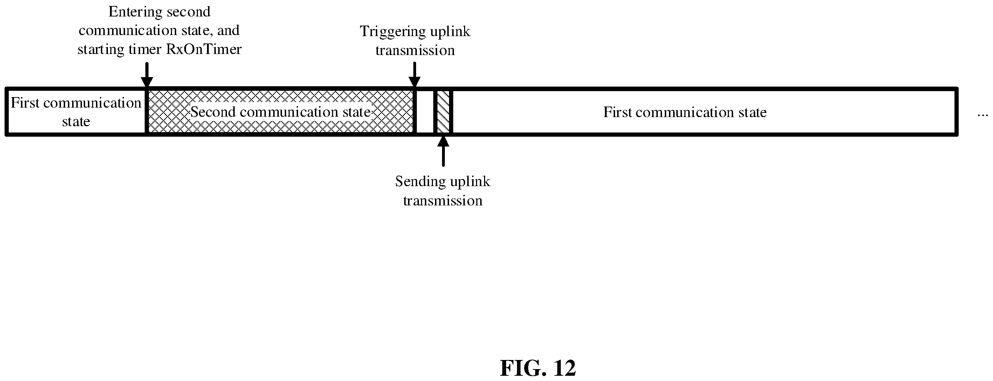

The operation of the network waking up the first communication device of the terminal device through the second control information is mainly determined based on transmission needs of downlink data. For the uplink transmission, when the first communication device of the terminal device is in the second communication state, if the terminal device needs to perform the uplink transmission, the terminal device may actively switch the first communication device to the first communication state, so as to perform the uplink transmission through the first communication device. Here, the uplink transmission may be SR transmission, PRACH transmission, PUCCH transmission, CG PUSCH transmission, or SRS transmission. When the network monitors the uplink transmission from the terminal device, the network also updates the state of the first communication device of the terminal device to be the first communication state, where the state of the first communication device of the terminal device is maintained by the network. As shown in FIG. 12, when the terminal device triggers the uplink transmission, the terminal device actively switches the first communication device to the first communication state, so as to perform the uplink transmission through the first communication device.

In the embodiments of the present disclosure, in a case that the first communication device is in the second communication state, the terminal device may further save the power in at least one of the following dimensions: a BandWidth Part (BWP) on which the terminal device operates (i.e., an active BWP), or a state of a secondary cell, which is illustrated below.

**Power saving from a dimension of BWP**

In some implementations, in a case that the first communication device is in the second communication state, the terminal device switches an active BWP of the terminal device from a first BWP to a second BWP at a second moment.

Here, the active BWP of the terminal device refers to the BWP on which the terminal device operates, i.e. the BWP on which the first communication device operates. The first BWP refers to the current active BWP of the terminal device.

Here, power consumption of the terminal device operating on the second BWP is lower than power consumption of the terminal device operating on the first BWP.

In some implementations, the second BWP is a default BWP, an initial BWP, or a dormant BWP.

In some implementations, the second moment is a moment when the first communication device is switched to the second communication state.

In some implementations, the second moment is a moment when a third timer expires. Here, the terminal device starts or restarts the third timer after the first communication device is switched to the second communication state; or the terminal device maintains continuous operation of the third timer after the first communication device is switched to the second communication state. As an example, the third timer may be an existing timer, such as a BWP inactivity timer (bwp-InactivityTimer), or, the third timer may be a newly defined timer.

In some implementations, after the first communication device is switched from the second communication state to the first communication state, the terminal device maintains the active BWP unchanged as the second BWP, or switches the active BWP from the second BWP to the first BWP or a first active BWP.

The aforementioned solution is explained and illustrated below in combination with specific application examples.

For a serving cell, when the bwp-InactivityTimer is configured, the terminal device restarts the bwp-InactivityTimer if there is the uplink transmission or downlink transmission on the current active BWP. If there is no uplink transmission or downlink transmission during operation of the bwp-InactivityTimer, the terminal device switches the active BWP to the default BWP when the bwp-InactivityTimer expires. Here, the default BWP is configured by the network through defaultDownlinkBWP-Id. If the network does not configure the defaultDownlinkBWP-Id, the terminal device switches the active BWP to the initial BWP. It is thus clear that the default BWP or initial BWP is a BWP on which the terminal device is located when there is no uplink transmission or downlink transmission. After the first communication device of the terminal device enters the second communication state on the current active BWP, if the current active BWP is not the default BWP, the terminal device may immediately switch the active BWP to the default BWP or initial BWP, or the terminal device may switch the active BWP to the default BWP or initial BWP after a timer (i.e., the aforementioned third timer) expires. The timer may be an independent timer, and the terminal device starts the timer after the first communication device enters the second communication state. Alternatively, the timer may be an existing timer such as the bwp-InactivityTimer, and the terminal device starts the timer or maintains continuous operation of the timer after the first communication device enters the second communication state. It is to be noted that, in a case that the first communication device is in the second communication state, the terminal device cannot perform transmission on the default BWP or initial BWP after the terminal device switches to the default BWP or the initial BWP. Further, after the first communication device is switched from the second communication state to the first communication state, the active BWP of the terminal device may be maintained unchanged as the default BWP or the initial BWP, or the active BWP of the terminal device may be automatically switched to the previous BWP or the first active BWP.

In a scenario of carrier aggregation, the power saving may be achieved by dormancy of the secondary cell. The entire carrier enters dormancy by switching the active BWP of the secondary cell to the dormant BWP. The terminal device does not perform PDCCH detection on the dormant BWP. The dormant BWP is configured by a signaling of dormantBWP-Id. After the first communication device of the terminal device enters the second communication state on the current active BWP, if the current active BWP is not the dormant BWP, the terminal device may immediately switch the active BWP to the dormant BWP, or the terminal device may switch the active BWP to the dormant BWP after a timer (i.e., the aforementioned third timer) expires. The timer may be an independent timer, and the terminal device starts the timer after the first communication device enters the second communication state. It is to be noted that, in a case that the first communication device is in the second communication state, the terminal device cannot perform transmission on the dormant BWP after the terminal device switches to the dormant BWP. Further, after the first communication device is switched from the second communication state to the first communication state, the active BWP of the terminal device may be maintained unchanged as the dormant BWP, or the active BWP of the terminal device may be automatically switched to the previous BWP or the first active BWP.

## Power saving from a dimension of cell state

In some implementations, in a case that the first communication device is in the second communication state, the terminal device switches a secondary cell of the terminal device from a first state to a second state at a third moment.

Here, the secondary cell of the terminal device refers to the secondary cell in which the terminal device operates, i.e. the secondary cell in which the first communication device operates. The first state refers to the current state of the secondary cell.

Here, power consumption of the terminal device operating in the secondary cell in the second state is lower than power consumption of the terminal device operating in the secondary cell in the first state.

In some implementations, the first state is an active state and the second state is a deactivated state.

In some implementations, the first state is an active state with a non-dormancy behavior and the second state is an active state with a dormancy behavior.

In some implementations, the first state is the active state with the dormancy behavior and the second state is the deactivated state.

In some implementations, the third moment is a moment when the first communication device is switched to the second communication state.

In some implementations, the third moment is a moment when a fourth timer expires. Here, the terminal device starts or restarts the fourth timer after the first communication device is switched to the second communication state; or the terminal device maintains continuous operation of the fourth timer after the first communication device is switched to the second communication state. As an example, the fourth timer may be an existing timer, or the fourth timer may be a newly defined timer.

In some implementations, after the first communication device is switched from the second communication state to the first communication state, the terminal device switches the secondary cell of the terminal device from the second state to the first state.

The aforementioned solution is explained and illustrated below in combination with specific application examples.

In a scenario of carrier aggregation, the secondary cell may enter the deactivated state based on triggering of a timer, i.e., a secondary cell deactivation timer (sCellDeactivationTimer). When the sCellDeactivationTimer expires, the secondary cell is automatically deactivated. If there is uplink transmission or downlink transmission in the secondary cell, the terminal device restarts the sCellDeactivationTimer. If there is no uplink transmission or downlink transmission in the secondary cell during operation of the sCellDeactivationTimer, the secondary cell is automatically deactivated when the sCellDeactivationTimer expires. After the first communication device of the terminal device enters the second communication state in the current active secondary cell, the terminal device may immediately switch the secondary cell to the deactivated state, or the terminal device may switch the secondary cell to the deactivated state after a timer (i.e., the aforementioned fourth timer) expires. The timer may be an independent timer, and the terminal device starts the timer after the first communication device enters the second communication state. Alternatively, the timer may be an existing timer, such as the sCellDeactivationTimer, and the terminal device starts the timer or maintains continuous operation of the timer after the first communication device enters the second communication state. Further, when the first communication device is in the second communication state, if the terminal device receives the second control information (which may be referred to as the wake-up signal or wake-up information) from the network, the terminal device may also activate the secondary cell upon switching the first communication device to the first communication state. The active BWP on which the active secondary cell operates is the first active BWP configured by the network.

With the technical solutions of the embodiments of the present disclosure, the switching of the first communication device of the terminal device between the first communication state and the second communication state is implemented. Thus, it ensures that the first communication device in the first communication state is successfully switched to the second communication state based on the first triggering condition, and further ensures that the first communication device in the second communication state is successfully switched to the first communication state based on the second triggering condition. In such way, it is possible to implement the switching of the communication state of the first communication device in a case that, for example, the second communication device of the terminal device cannot receive the control information from the network device successfully. In addition, the switching of the communication state is triggered by the triggering condition, which can reduce overhead of the control signaling.

Preferred implementations of the present disclosure have been described in detail above in combination with the accompanying drawings, but the present disclosure is not limited to the specific details in the aforementioned implementations. Within the scope of the technical conception of the present disclosure, a variety of simple variations can be made to the technical solutions of the present disclosure, and such simple variations all fall within the scope of protection of the present disclosure. For example, various specific technical features described in the aforementioned specific implementations may be combined in any suitable manner without contradiction, and various possible combinations are not further described in the present disclosure, in order to avoid unnecessary repetition. For another example, any combination may be made between various implementations of the present disclosure, as long as it does not depart from the idea of the present disclosure, and is likewise to be regarded as the contents of the present disclosure. For another example, on the premise of no conflict, various embodiments described in the present disclosure and/or the technical features in the various embodiments can be combined with the related art at will. The technical solutions obtained after the combination shall also fall within the scope of protection of the present disclosure.

It is further to be understood that, in various method embodiments of the present disclosure, the size of the sequence number of the aforementioned processes does not imply the sequence of execution. The sequence of execution of the processes shall be determined by functions thereof and internal logic, and shall not constitute any limitation on the implementation processes of the embodiments of the present disclosure. Furthermore, in the embodiments of the present disclosure, the terms "downlink", "uplink" and "sidelink" are used to represent a transmission direction of a signal or data. Herein, "downlink" is used to represent that the transmission direction of the signal or data is a first direction transmitted from a station to a user device of a cell; "uplink" is used to represent that the transmission direction of the signal or data is a second direction transmitted from the user device of the cell to the station; and "sidelink" is used to represent that the transmission direction of the signal or data is a third direction transmitted from a user device 1 to a user device 2. For example, a "downlink signal" represents that the signal is transmitted in the first direction. In addition, in the embodiments of the present disclosure, the term "and/or" only indicates an association relationship for describing associated objects, and represents that there are three kinds of relationships. For example, "A and/or B" may represent three conditions, i.e., independent existence of A, existence of both A and B, and independent existence of B. Additionally, the character "/" herein usually represents that previous and next associated objects form an "or" relationship.

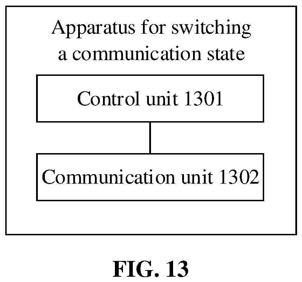

FIG. 13 is a schematic structural diagram of an apparatus for switching a communication state according to an embodiment of the present disclosure, and the apparatus is applied to a terminal device. As shown in FIG. 13, the apparatus for switching the communication state includes a control unit 1301.

The control unit 1301 is configured to switch, based on a first triggering condition, a first communication device from a first communication state to a second communication state, or switch, based on a second triggering condition, the first communication device from the second communication state to the first communication state.

The terminal device is able to receive control information from a network device through the second communication device, and control a communication state of the first communication device based on the control information.

In some implementations, power consumption of the second communication device is lower than power consumption of the first communication device; and/or, power consumption corresponding to the first communication device in the first communication state is higher than power consumption corresponding to the first communication device in the second communication state.

In some implementations, an operation supported by the first communication device in the first communication state is different from an operation supported by the first communication device in the second communication state.

In some implementations, the operation supported by the first communication device in the first communication state includes at least one of:

a signal transmission operation and/or a channel transmission operation; or
a measurement operation.

In some implementations, the operation supported by the first communication device in the second communication state includes a measurement operation.

In some implementations, the control unit 1301 is configured to: in a case that the first communication device is in the first communication state, switch, based on a first timer, the first communication device from the first communication state to the second communication state.

In some implementations, the control unit 1301 is configured to: start the first timer after the first communication device is switched to the first communication state; if the terminal device receives a signal and/or a channel through the first communication device during operation of the first timer, restart the first timer; and if the first timer expires, switch the first communication device from the first communication state to the second communication state.

In some implementations, a duration of the first timer is configured by the network device; or the duration of the first timer is predefined; or the duration of the first timer is determined based on a reference duration.

In some implementations, the reference duration is a duration of a Discontinuous Reception (DRX) cycle.

In some implementations, the control unit 1301 is configured to: in a case that the first communication device is in the first communication state, switch the first communication device from the first communication state to the second communication state if the terminal device receives first control information. The first control information is used to be indicative of switching the first communication device from the first communication state to the second communication state.

In some implementations, the control unit 1301 is configured to switch the first communication device from the first communication state to the second communication state at a first time. The first time is a time after a reception time for the first control information.

In some implementations, the first time is configured by the network device or predefined.

In some implementations, the first time is determined based on a second time and a second duration. The second time is the reception time for the first control information, and the second duration is configured by the network device or predefined.

In some implementations, the first time is associated with a first processing capability of the terminal device. The first processing capability indicates a processing capability of the terminal device from receiving the first control information to being prepared to switch the first communication device from the first communication state to the second communication state.

In some implementations, the control unit 1301 is configured to: in a case that the first communication device is in the second communication state, switch, based on a second timer, the first communication device from the second communication state to the first communication state.

In some implementations, the control unit 1301 is configured to: start the second timer after the first communication device is switched to the second communication state; if second control information is received during operation of the second timer, switch the first communication device from the second communication state to the first communication state, and stop the second timer; and if the second timer expires, switch the first communication device from the second communication state to the first communication state.

The second control information is used to be indicative of switching the first communication device from the second communication state to the first communication state.

In some implementations, the control unit 1301 is configured to restart the second timer if the terminal device receives first control information during the operation of the second timer. The first control information is used to be indicative of switching the first communication device from the first communication state to the second communication state.

In some implementations, a duration of the second timer is configured by the network device; or the duration of the second timer is predefined.

In some implementations, the apparatus further includes a communication unit 1302. The communication unit 1302 is configured to receive, through the first communication device, the first control information from the network device.

In some implementations, the first control information is carried in an MAC CE and/or a PDCCH.

In some implementations, the device further includes the communication unit 1302. The communication unit 1302 is configured to receive, through the second communication device, the first control information from the network device.

In some implementations, the first control information is carried in the PDCCH.

In some implementations, the device further includes the communication unit 1302. The communication unit 1302 is configured to receive, through the first communication device, the second control information from the network device.

In some implementations, the second control information is carried in the MAC CE and/or the PDCCH.

In some implementations, the device further includes the communication unit 1302. The communication unit 1302 is configured to receive, through the second communication device, the second control information from the network device.

In some implementations, the second control information is carried in the PDCCH.

In some implementations, the control unit 1301 is configured to: in a case that the first communication device is in the second communication state, switch the first communication device from the second communication state to the first communication state if uplink transmission is triggered.

In some implementations, the uplink transmission includes at least one of: Scheduling Request (SR) transmission, Physical Random Access Channel (PRACH) transmission, Physical Uplink Control Channel (PUCCH) transmission, Configured Grant Physical Uplink Shared Channel (CG PUSCH) transmission, or Sounding Reference Signal (SRS) transmission.

In some implementations, the control unit 1301 is configured to: in a case that the first communication device is in the second communication state, switch an active BWP of the terminal device from a first BWP to a second BWP at a second moment.

In some implementations, the second BWP is a default BWP, an initial BWP, or a dormant BWP.

In some implementations, the second moment is a moment when the first communication device is switched to the second communication state; or the second moment is a moment when a third timer expires.

In some implementations, the control unit 1301 is configured to: start or restart the third timer after the first communication device is switched to the second communication state; or maintain continuous operation of the third timer after the first communication device is switched to the second communication state.

In some implementations, the control unit 1301 is configured to: maintain the active BWP unchanged as the second BWP, or switch the active BWP from the second BWP to the first BWP or a first active BWP, after the first communication device is switched from the second communication state to the first communication state.

In some implementations, the control unit 1301 is configured to: in a case that the first communication device is in the second communication state, switch a secondary cell of the terminal device from a first state to a second state at a third moment.

In some implementations, the first state is an active state and the second state is a deactivated state; or the first state is an active state with a non-dormancy behavior and the second state is an active state with a dormancy behavior; or the first state is the active state with the dormancy behavior and the second state is the deactivated state.

In some implementations, the third moment is a moment when the first communication device is switched to the second communication state; or the third moment is a moment when a fourth timer expires.

In some implementations, the control unit 1301 is configured to: start or restart the fourth timer after the first communication device is switched to the second communication state; or maintain continuous operation of the fourth timer after the first communication device is switched to the second communication state.

In some implementations, the control unit 1301 is configured to switch the secondary cell of the terminal device from the second state to the first state, after the first communication device is switched from the second communication state to the first communication state.

It is to be understood by those skilled in the art that the relevant description of the aforementioned apparatus for switching the communication state according to the embodiments of the present disclosure may be understood with reference to the relevant description of the method for switching the communication state according to the embodiments of the present disclosure.

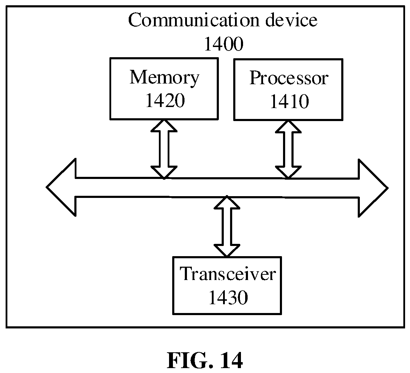

FIG. 14 is a schematic structural diagram of a communication device 1400 according to an embodiment of the present disclosure. The communication device may be a terminal device. The communication device 1400 shown in FIG. 14 includes a processor 1410, and the processor 1410 may call and run a computer program from a memory to implement the method in the embodiments of the present disclosure.

In an embodiment, as shown in FIG. 14, the communication device 1400 may further include a memory 1420. Herein, the processor 1410 may call and run the computer program from the memory 1420 to implement the method in the embodiments of the present disclosure.

Herein, the memory 1420 may be a separate device independent of the processor 1410, or may be integrated into the processor 1410.

In an embodiment, as shown in FIG. 14, the communication device 1400 may further include a transceiver 1430, and the processor 1410 may control the transceiver 1430 to communicate with other devices. Specifically, the transceiver 1430 may transmit information or data to other devices, or receive information or data from other devices.

Herein, the transceiver 1430 may include a transmitter and a receiver. The transceiver 1430 may further include one or more antennas.

In an embodiment, the communication device 1400 may specifically be the terminal device of the embodiments of the present disclosure. The communication device 1400 may implement the corresponding process implemented by the terminal device in each method of the embodiments of the present disclosure. For brevity, details will not repeated herein again.

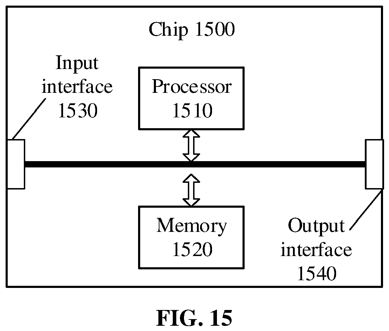

FIG. 15 is a schematic structural diagram of a chip according to an embodiment of the present disclosure. The chip 1500 shown in FIG. 15 includes a processor 1510, and the processor 1510 may call and run a computer program from a memory to implement the method in the embodiments of the present disclosure.

In an embodiment, as shown in FIG. 15, the chip 1500 may further include a memory 1520. Herein, the processor 1510 may call and run the computer program from the memory 1520 to implement the method in the embodiments of the present disclosure.

Herein, the memory 1520 may be a separate device independent of the processor 1510, or may be integrated into the processor 1510.

In an embodiment, the chip 1500 may further include an input interface 1530. Herein, the processor 1510 may control the input interface 1530 to communicate with other devices or chips. Specifically, the input interface 1530 may obtain information or data from other devices or chips.

In an embodiment, the chip 1500 may further include an output interface 1540. Herein, the processor 1510 may control the output interface 1540 to communicate with other devices or chips. Specifically, the output interface 1540 may output information or data to other devices or chips.

The chip may be applied to the terminal device in the embodiments of the present disclosure, and the chip may implement the corresponding process implemented by the terminal device in each method of the embodiments of the present disclosure. For brevity, details will not be repeated herein again.

It is to be understood that the chip referred to in the embodiments of the present disclosure may also be referred to as a system-level chip, a system chip, a chip system, or a system-on-chip, etc.

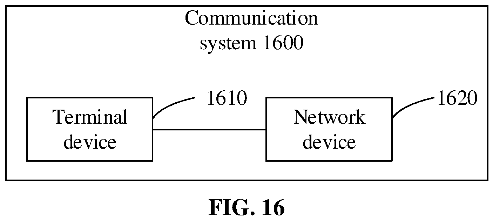

FIG. 16 is a schematic block diagram of a communication system 1600 according to an embodiment of the present disclosure. As shown in FIG. 16, the communication system 1600 includes a terminal device 1610 and a network device 1620.

Herein, the terminal device 1610 may be configured to implement the corresponding functions implemented by the terminal device in the foregoing method, and the network device 1620 may be configured to implement the corresponding functions implemented by the network device in the foregoing method. For brevity, details are not described herein again.

It is to be understood that the processor in the embodiments of the present disclosure may be an integrated circuit chip and has a signal processing capability. In an implementation process, various operations in the aforementioned method embodiments may be completed by an integrated logical circuit of hardware or an instruction in a software form in the processor. The processor may be a general-purpose processor, a Digital Signal Processor (DSP), an Application Specific Integrated Circuit (ASIC), a Field Programmable Gate Array (FPGA) or another programmable logical device, discrete gate or transistor logical device, or discrete hardware component. Various methods, operations and logical block diagrams disclosed in the embodiments of the present disclosure may be implemented or executed. The general-purpose processor may be a microprocessor, or the processor may be any conventional processor or the like. Operations in combination with the method disclosed in the embodiments of the present disclosure may be directly embodied to be executed and completed by a hardware decoding processor, or by a combination of hardware and software modules in the decoding processor. The software module may be located in a mature storage medium in the field, such as a Random Access Memory (RAM), a flash memory, a Read-Only Memory (ROM), a Programmable ROM (PROM), an electrically erasable programmable memory, a register, or the like. The storage medium is located in a memory, and the processor reads information in the memory to complete the operations of the foregoing method in combination with hardware.

It is to be understood that the memory in the embodiments of the present disclosure may be a volatile memory or a non-volatile memory, or may include both the volatile memory and the non-volatile memory. The non-volatile memory may be a ROM, a PROM, an Erasable PROM (EPROM), an Electrically EPROM (EEPROM) or a flash memory. The volatile memory may be a RAM, which is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) or a Direct Rambus RAM (DR RAM). It is to be noted that the memory of the systems and methods described herein is intended to include, but not limited to, memories of these and any other proper types.

It is to be understood that the aforementioned memory is described only exemplarily rather than limitedly. For example, the memory in the embodiments of the present disclosure may further be an SRAM, a DRAM, an SDRAM, a DDR SDRAM, an ESDRAM, an SLDRAM, a DR RAM, or the like. That is, the memory in the embodiments of the present disclosure is intended to include, but not limited to, memories of these and any other proper types.

An embodiment of the present disclosure further provides a computer-readable storage medium configured to store a computer program. The computer-readable storage medium may be applied to the terminal device in the embodiments of the present disclosure, and the computer program is executed to enable a computer to perform the corresponding process implemented by the terminal device in each method of the embodiments of the present disclosure. For brevity, details will not be repeated herein again.

An embodiment of the present disclosure further provides a computer program product, which includes computer program instructions. The computer program product may be applied to the terminal device in the embodiments of the present disclosure, and the computer program instructions are executed to enable a computer to perform the corresponding process implemented by the terminal device in each method of the embodiments of the present disclosure. For brevity, details will not be repeated herein again.

An embodiment of the present disclosure further provides a computer program. The computer program may be applied to the terminal device in the embodiments of the present disclosure, and the computer program, when is run on a computer, enables the computer to perform the corresponding process implemented by the terminal device in each method of the embodiments of the present disclosure. For brevity, details will not be repeated herein again.

Those of ordinary skill in the art may realize that units and algorithm steps of each example described in combination with the embodiments disclosed herein may be implemented by electronic hardware, or a combination of computer software and electronic hardware. Whether these functions are executed in a hardware or software manner depends on specific applications and design constraints of the technical solutions. Professionals may implement the described functions for each specific application by using different methods, but such implementation shall not be regarded as outside the scope of the present disclosure.

Those skilled in the art may clearly understand that, for the specific working processes of the systems, devices and units described above, reference may be made to the corresponding processes in the aforementioned method embodiments, and the specific working processes of the systems, devices and units will not be repeated herein for convenient and brief description.

In some embodiments provided by the present disclosure, it is to be understood that the disclosed systems, devices and methods may be implemented in other manners. For example, the devices embodiments described above are only schematic. For example, division of the units is only a kind of logical function division, and other division manners may be adopted during practical implementation. For example, multiple units or components may be combined or integrated into another system, or some characteristics may be neglected or not executed. In addition, coupling or direct coupling or communication connection between various displayed or discussed components may be indirect coupling or communication connection, implemented through some interfaces, of the devices or the units, and may be electrical, mechanical, or in other forms.

The units described as separate components may or may not be physically separated, and the components displayed as units may or may not be physical units, that is, may be located in the same place, or may also be distributed to multiple network units. Part or all of the units may be selected to achieve the purpose of the solutions of the embodiments according to practical requirements.

In addition, various functional units in various embodiments of the present disclosure may be integrated into a processing unit, or each functional unit may physically exist independently, or two or more than two functional units may be integrated into a unit.

When the above functions are implemented in the form of a software function module and sold or used as an independent product, the functions may be stored in a computer-readable storage medium. Based on such understanding, the essential part of the technical solutions of the present disclosure or a part of the technical solutions that contributes to the related art or a part of the technical solutions can be embodied in a form of a software product. The computer software product is stored in a storage medium and includes several instructions to enable a computer device (which may be a personal computer, a server, or a network device, etc.) to execute all or part of the operations of the methods in various embodiments of the present disclosure. The forgoing storage medium includes various media that can store program codes, such as a USB disk, a mobile hard disk, a ROM, a RAM, a magnetic disk, an optical disk, or the like.

The foregoing are only specific implementations of the present disclosure, but the scope of protection of the present disclosure is not limited thereto. Variations or replacements which can be readily thought by those skilled in the art within the technical scope disclosed in the present disclosure shall fall within the scope of protection of the present disclosure. Therefore, the scope of protection of the present disclosure shall be subject to the scope of protection of the claims.

**Claims**

1. A method for switching a communication state, comprising:

   switching, by a terminal device, based on a first triggering condition, a first communication device from a first communication state to a second communication state, or switching, by the terminal device, based on a second triggering condition, the first communication device from the second communication state to the first communication state;

wherein the terminal device is able to receive control information from a network device through the second communication device, and control a communication state of the first communication device based on the control information.

2. The method of claim 1, wherein

power consumption of the second communication device is lower than power consumption of the first communication device; and/or

power consumption corresponding to the first communication device in the first communication state is higher than power consumption corresponding to the first communication device in the second communication state.

3. The method of claim 1 or 2, wherein an operation supported by the first communication device in the first communication state is different from an operation supported by the first communication device in the second communication state.

4. The method of claim 3, wherein the operation supported by the first communication device in the first communication state comprises at least one of:

a signal transmission operation and/or a channel transmission operation; or

a measurement operation.

5. The method of claim 3, wherein the operation supported by the first communication device in the second communication state comprises a measurement operation.

6. The method of any one of claims 1 to 5, wherein switching, by the terminal device, based on the first triggering condition, the first communication device from the first communication state to the second communication state comprises:

in a case that the first communication device is in the first communication state, switching, by the terminal device, based on a first timer, the first communication device from the first communication state to the second communication state.

7. The method of claim 6, wherein in the case that the first communication device is in the first communication state, switching, by the terminal device, based on the first timer, the first communication device from the first communication state to the second communication state comprises:

starting, by the terminal device, the first timer after the first communication device is switched to the first communication state; and

if the terminal device receives a signal and/or a channel through the first communication device during operation of the first timer, restarting, by the terminal device, the first timer; and if the first timer expires, switching, by the terminal device, the first communication device from the first communication state to the second communication state.

8. The method of claim 6 or 7, wherein

a duration of the first timer is configured by the network device;

the duration of the first timer is predefined; or

the duration of the first timer is determined based on a reference duration.

9. The method of claim 8, wherein the reference duration is a duration of a Discontinuous Reception (DRX) cycle.

10. The method of any one of claims 1 to 5, wherein switching, by the terminal device, based on the first triggering condition, the first communication device from the first communication state to the second communication state comprises:

in a case that the first communication device is in the first communication state, switching, by the terminal device, the first communication device from the first communication state to the second communication state if the terminal device receives first control information, wherein the first control information is used to be indicative of switching the first communication device from the first communication state to the second communication state.

11. The method of claim 10, wherein switching the first communication device from the first communication state to the second communication state comprises:
switching the first communication device from the first communication state to the second communication state at a first time, wherein the first time is a time after a reception time for the first control information.

12. The method of claim 11, wherein the first time is configured by the network device or predefined.

13. The method of claim 11, wherein the first time is determined based on a second time and a second duration, the second time is the reception time for the first control information, and the second duration is configured by the network device or predefined.

14. The method of any one of claims 11 to 13, wherein the first time is associated with a first processing capability of the terminal device, and the first processing capability refers to a processing capability of the terminal device from receiving the first control information to being prepared to switch the first communication device from the first communication state to the second communication state.

15. The method of any one of claims 1 to 5, wherein switching, by the terminal device, based on the second triggering condition, the first communication device from the second communication state to the first communication state comprises:
in a case that the first communication device is in the second communication state, switching, by the terminal device, based on a second timer, the first communication device from the second communication state to the first communication state.

16. The method of claim 15, wherein in the case that the first communication device is in the second communication state, switching, by the terminal device, based on the second timer, the first communication device from the second communication state to the first communication state comprises:

starting, by the terminal device, the second timer after the first communication device is switched to the second communication state; and
if the terminal device receives second control information during operation of the second timer, switching, by the terminal device, the first communication device from the second communication state to the first communication state, and stopping the second timer; and if the second timer expires, switching, by the terminal device, the first communication device from the second communication state to the first communication state;
wherein the second control information is used to be indicative of switching the first communication device from the second communication state to the first communication state.

17. The method of claim 16, further comprising:
if the terminal device receives first control information during the operation of the second timer, restarting, by the terminal device, the second timer, wherein the first control information is used to be indicative of switching the first communication device from the first communication state to the second communication state.

18. The method of claim 16 or 17, wherein

a duration of the second timer is configured by the network device; or
the duration of the second timer is predefined.

19. The method of any one of claims 10 to 14 and 17, wherein receiving the first control information comprises:
receiving, through the first communication device, the first control information from the network device.

20. The method of claim 19, wherein the first control information is carried in a Media Access Control Control Element (MAC CE) and/or a Physical Downlink Control Channel (PDCCH).

21. The method of any one of claims 10 to 14 and 17, wherein receiving the first control information comprises:
receiving, through the second communication device, the first control information from the network device.

22. The method of claim 21, wherein the first control information is carried in a Physical Downlink Control Channel (PDCCH).

23. The method of any one of claims 16 to 18, wherein receiving the second control information comprises:
receiving, through the first communication device, the second control information from the network device.

24. The method of claim 23, wherein the second control information is carried in a Media Access Control Control Element (MAC CE) and/or a Physical Downlink Control Channel (PDCCH).

25. The method of any one of claims 16 to 18, wherein receiving the second control information comprises:
receiving, through the second communication device, the second control information from the network device.

26. The method of claim 25, wherein the second control information is carried in a Physical Downlink Control Channel (PDCCH).

27. The method of any one of claims 1 to 5, wherein switching, by the terminal device, based on the second triggering condition, the first communication device from the second communication state to the first communication state comprises:
in a case that the first communication device is in the second communication state, switching, by the terminal device, the first communication device from the second communication state to the first communication state if the terminal device triggers uplink transmission.

28. The method of claim 27, wherein the uplink transmission comprises at least one of: Scheduling Request (SR) transmission, Physical Random Access Channel (PRACH) transmission, Physical Uplink Control Channel (PUCCH) transmission, Configured Grant Physical Uplink Shared Channel (CG PUSCH) transmission, or Sounding Reference Signal (SRS) transmission.

29. The method of any one of claims 1 to 28, further comprising:
in a case that the first communication device is in the second communication state, switching, by the terminal device, an active BandWidth Part (BWP) of the terminal device from a first BWP to a second BWP at a second moment.

30. The method of claim 29, wherein the second BWP is a default BWP, an initial BWP, or a dormant BWP.

31. The method of claim 29 or 30, wherein

the second moment is a moment when the first communication device is switched to the second communication state; or
the second moment is a moment when a third timer expires.

32. The method of claim 31, further comprising:

starting or restarting, by the terminal device, the third timer after the first communication device is switched to the second communication state; or
maintaining, by the terminal device, continuous operation of the third timer after the first communication device is switched to the second communication state.

33. The method of any one of claims 29 to 32, further comprising:
maintaining, by the terminal device, the active BWP unchanged as the second BWP, or switching, by the terminal device, the active BWP from the second BWP to the first BWP or a first active BWP, after the first communication device is switched from the second communication state to the first communication state.

34. The method of any one of claims 1 to 33, further comprising:
in a case that the first communication device is in the second communication state, switching, by the terminal device, a secondary cell of the terminal device from a first state to a second state at a third moment.

35. The method of claim 34, wherein

the first state is an active state and the second state is a deactivated state;
the first state is an active state with a non-dormancy behavior and the second state is an active state with a dormancy behavior; or
the first state is the active state with the dormancy behavior and the second state is the deactivated state.

36. The method of claim 34 or 35, wherein

the third moment is a moment when the first communication device is switched to the second communication state; or
the third moment is a moment when a fourth timer expires.

37. The method of claim 36, further comprising:

starting or restarting, by the terminal device, the fourth timer after the first communication device is switched to the second communication state; or
maintaining, by the terminal device, continuous operation of the fourth timer after the first communication device is switched to the second communication state.

38. The method of any one of claims 34 to 37, further comprising:
switching, by the terminal device, the secondary cell of the terminal device from the second state to the first state after the first communication device is switched from the second communication state to the first communication state.

39. An apparatus for switching a communication state, applied to a terminal device, comprising:

a control unit, configured to switch, based on a first triggering condition, a first communication device from a first communication state to a second communication state, or switch, based on a second triggering condition, the first communication device from the second communication state to the first communication state;
wherein the terminal device is able to receive control information from a network device through the second communication device, and control a communication state of the first communication device based on the control information.

40. A terminal device comprising a processor and a memory, wherein the memory is configured to store a computer program, and the processor is configured to call and run the computer program stored in the memory to perform the method of any one of claims 1 to 38.

41. A chip, comprising a processor configured to call and run a computer program in a memory, to enable a device having installed thereon the chip to perform the method of any one of claims 1 to 38.

42. A computer-readable storage medium configured to store a computer program for enabling a computer to perform the method of any one of claims 1 to 38.

43. A computer program product comprising computer program instructions for enabling a computer to perform the method of any one of claims 1 to 38.

44. A computer program for enabling a computer to perform the method of any one of claims 1 to 38.

**FIG. 1**

**FIG. 2**

Power saving
signal indicating to
monitor PDCCH

Power saving
signal indicating
not to monitor
PDCCH

Power saving
signal indicating
not to monitor
PDCCH

Power saving
signal indicating to
monitor PDCCH

0

1

2

3

DRX cycle

**FIG. 3**

**FIG. 4**

Power saving
signal indicating
to monitor paging
PDCCH

Power saving
signal indicating
not to monitor
paging PDCCH

Power saving
signal indicating to
monitor paging
PDCCH

PO or PF

PO or PF

PO or PF

## FIG. 5

**FIG. 6**

A terminal device switches, based on a first triggering condition, a first communication device from a first communication state to a second communication state, or switches, based on a second triggering condition, the first communication device from the second communication state to the first communication state; where the terminal device is able to receive control information from a network device through the second communication device, and control a communication state of the first communication device based on the control information

701

**FIG. 7**

On Duration

Data transmission scheduling

DRX deactivation timer expiring

DRX short cycle timer expiring, or receiving long DRX command MAC CE

Long DRX cycle

Continuous reception

Short DRX cycle

Short DRX cycle

Long DRX cycle

**FIG. 8**

On
Duration

Entering long DRX
cycle, and starting
timer RxOffTimer

Timer
RxOffTimer
expiring

Short DRX
cycle

Long DRX cycle

Long DRX cycle

Second communication state

...

EP 4 542 942 A1

**FIG. 9**

Entering second communication
state, and starting timer
RxOnTimer

Timer RxOnTimer expiring, or
receiving second control
information

| First communication state | Second communication state | First communication state | ... |

**FIG. 10**

EP 4 542 942 A1

Entering second
communication state, and
starting timer RxOnTimer

Receiving first control
information, and restarting
timer RxOnTimer

Timer RxOnTimer expiring,
or receiving second control
information

| First communication state | Second communication state | First communication state |

...

**FIG. 11**

Entering second
communication state, and
starting timer RxOnTimer

Triggering uplink
transmission

| First communication state | Second communication state | | First communication state | ... |

Sending uplink
transmission

**FIG. 12**

Apparatus for switching
a communication state

Control unit 1301

Communication unit 1302

**FIG. 13**

Communication device
1400

Memory
1420

Processor
1410

Transceiver
1430

**FIG. 14**

**FIG. 15**

Communication
system 1600

Terminal
device — 1610

Network
device — 1620

FIG. 16

## INTERNATIONAL SEARCH REPORT

| International application No. |
|---|
| **PCT/CN2022/098994** |

### A. CLASSIFICATION OF SUBJECT MATTER

H04L 27/00(2006.01)i

According to International Patent Classification (IPC) or to both national classification and IPC

### B. FIELDS SEARCHED

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 状态, 节能, 切换, 激活, 去激活, 触发, 条件, 非连续接收, 定时器, 唤醒, state, power saving, handover, active, deactive, trigger, condition, DRX, timer, wake up

### C. DOCUMENTS CONSIDERED TO BE RELEVANT

| Category* | Citation of document, with indication, where appropriate, of the relevant passages | Relevant to claim No. |
|---|---|---|
| X | CN 108093463 A (HUAWEI TECHNOLOGIES CO., LTD.) 29 May 2018 (2018-05-29) description, paragraphs [0068]-[0121] | 1-44 |
| X | CN 111436103 A (VIVO COMMUNICATION TECHNOLOGY CO., LTD.) 21 July 2020 (2020-07-21) description, paragraphs [0062]-[0296] | 1-44 |
| A | CN 113543290 A (VIVO COMMUNICATION TECHNOLOGY CO., LTD.) 22 October 2021 (2021-10-22) entire document | 1-44 |
| A | WO 2020258108 A1 (GUANGDONG OPPO MOBILE TELECOMMUNICATIONS CORP., LTD.) 30 December 2020 (2020-12-30) entire document | 1-44 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 February 2023** | **24 February 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/098994**

| Patent document cited in search report | | | Publication date (day/month/year) | Patent family member(s) | Publication date (day/month/year) |
|---|---|---|---|---|---|
| CN | 108093463 | A | 29 May 2018 | None | |
| CN | 111436103 | A | 21 July 2020 | None | |
| CN | 113543290 | A | 22 October 2021 | None | |
| WO | 2020258108 | A1 | 30 December 2020 | None | |

Form PCT/ISA/210 (patent family annex) (July 2022)